# EUROPÄISCHE PATENTSCHRIFT

(11) **EP 2 251 171 B1**
(45) Veröffentlichungstag und Bekanntmachung des Hinweises auf die Patenterteilung: **02.04.2014**
(21) Anmeldenummer: 10162658.8
(22) Anmeldetag: 12.05.2010
(51) Int. Cl.: B27N 7/00, B27D 5/00, B29C 63/00

(54) **Vorrichtung zum Beschichten von Werkstücken**
Device for coating workpieces
Dispositif de revêtement de pièces usinées

(30) Priorität: 12.05.2009 DE 202009006793 U
(43) Veröffentlichungstag der Anmeldung: 17.11.2010
(73) Patentinhaber: Homag Holzbearbeitungssysteme AG, 72296 Schopfloch (DE)
(72) Erfinder: Schmid, Johannes, 72181, Starzach Wachendorf (DE)
(74) Vertreter: HOFFMANN EITLE

(56) Entgegenhaltungen:
- EP-A1- 0 510 231
- WO-A1-93/06995
- WO-A1-03/062340
- DE-A1- 4 315 792
- DE-A1-102006 056 010
- DE-U1- 9 306 484
- US-A1- 2001 046 530

## Beschreibung

### Technisches Gebiet

Vorrichtung zum Beschichten von Werkstücken, die bevorzugt zumindest abschnittsweise aus Holz, Holzwerkstoffen, Kunststoff oder dergleichen bestehen, nach dem Oberbegriff von Anspruch 1.

### Stand der Technik

Im Bereich der Möbel- und Bauelementeindustrie müssen häufig Werkstücke im Bereich ihrer Schmal- oder Breitfläche mit einem Beschichtungsmaterial versehen werden, beispielsweise wenn die Werkstücke aus Holzwerkstoffen wie MDF, Spanplatte oder dergleichen bestehen. Meist werden die Beschichtungsmaterialien mit den Werkstückoberflächen verleimt, wobei sich im Laufe der Jahrzehnte Verleimtechniken entwickelt haben.

Die häufigste Verleimtechnik basiert auf dem Einsatz eines Schmelzklebers, der in einer Beschichtungsmaschine erwärmt bzw. aktiviert wird, um das Beschichtungsmaterial mit dem Werkstück zu verbinden. So offenbart beispielsweise die DE 10 2006 056 010 ein Verfahren und eine Vorrichtung zum Fügen von Beschichtungsmaterialien an Werkstücken unter Einsatz eines Lasers. Dabei dient der Laser dazu, den beispielsweise auf dem Beschichtungsmaterial vorgesehenen oder anderweitig aufgetragenen Schmelzkleber zu aktivieren.

Insbesondere im Bereich der Werkstückecken kann der verwendete Kleber bzw. Leim in Form einer Leimfuge sichtbar werden. Mit dem immer weiter wachsenden ästhetischen Anspruch an die Werkstücke der Möbel- und Bauelementeindustrie ist eine derartige sichtbare Leimfuge jedoch unerwünscht. Daher besteht die Tendenz, die Dicke der Leimfuge bzw. die Menge des verwendeten Leims auf ein möglichst geringes Maß zu vermindern oder durch alternative Techniken zu ersetzen. Dabei hat sich allerdings gezeigt, dass mit zunehmender Verminderung der Leimfugendicke bzw. verwendeten Leimmenge das Beschichtungsmaterial schwieriger in eine gleichmäßige und optisch ansprechende Position an dem Werkstück gebracht werden kann.

Die DE 93 06 484 U1 offenbart eine Vorrichtung zum Anpressen von Kantenmaterial an die Kantenränder von plattenförmigen oder leistenförmigen Werkstücken aus Holz mit einer ersten Andruckwalze mit größerem Durchmesser und einer weiteren, in Durchlaufrichtung der ersten Andruckwalze nachgeschalteten, Andruckeinheit, die eine Andruckwalze mit kleinerem Durchmesser aufweist. Mindestens eine weitere Andruckwalze der Andruckeinheit besteht aus zwei etwa achsgleich nebeneinander angeordneten Walzenteilen, die unabhängig voneinander in Grenzen einstellbar sind. Die Vorrichtung weist eine Druckfederanordnung für die Druckbeaufschlagung der Walzenteile auf.

Die DE 43 15 792 A1 offenbart eine Vorrichtung zum Beschichten von Schmalflächen von Plattenelementen, die eine den Belag anpressende Andruckvorrichtung aufweist. Die Vorrichtung weist eine erste Andruckeinrichtung auf, die so ausgebildet ist, dass der Belag nur in den Randbereichen der Schmalfläche des Plattenelements angedrückt wird.

### Darstellung der Erfindung

Es ist daher Aufgabe der Erfindung, eine Vorrichtung zum Beschichten von Werkstücken der eingangs genannten Art bereitzustellen, die auch bei geringer Leimfugendicke bzw. Leimmenge ein gleichmäßiges und optisch ansprechendes Erscheinungsbild des an dem Werkstück vorgesehenen Beschichtungsmaterials ermöglicht.

Diese Aufgabe wird erfindungsgemäß durch eine Vorrichtung zum Beschichten von Werkstücken nach Anspruch 1 gelöst. Besonders bevorzugte Weiterbildungen der Erfindung sind in den abhängigen Ansprüchen angegeben.

Der Erfindung liegt der Gedanke zugrunde, das Fügen des Beschichtungsmaterials auf die Werkstückoberfläche zeitlich und räumlich wesentlich fokussierter durchzuführen als bisher. Zu diesem Zweck ist erfindungsgemäß vorgesehen, dass bei einer gattungsgemäßen Vorrichtung zum Beschichten von Werkstücken die Andrückeinrichtung mindestens zwei Andrückelemente aufweist, die in Förderrichtung zumindest abschnittsweise überlappend angeordnet sind.

Durch die in Förderrichtung überlappende Anordnung von mindestens zwei Andrückelementen kann der Anpressdruck auf das Beschichtungsmaterial wesentlich gezielter gesteuert werden, sodass ein gleichmäßiges Andrücken des Beschichtungsmaterials mit einer entsprechend gleichmäßigen und möglichst kaum mehr sichtbaren Leimfuge sichergestellt werden kann. Dabei stellt die zumindest teilweise überlappende Anordnung der Andrückelemente sicher, dass der Andrückvorgang innerhalb einer sehr kurzen "offenen Zeit" des jeweiligen Leims bzw. Haftmittels durchgeführt werden kann. Hintergrund hierfür ist, dass durch die verminderte Menge des verwendeten Haftmittels auch die Wärmekapazität in der sogenannten Haftmittelflotte zurückgeht. Dies führt dazu, dass auch die offene Zeit des verwendeten Haftmittels entsprechend verkürzt wird.

Hier setzt die Erfindung an und stellt durch die zumindest abschnittsweise überlappende Anordnung mindestens zweier Andrückelemente sicher, dass die offene Zeit des Haftmittels optimal ausgenutzt wird und gleichzeitig der Anpressdruck auf das Beschichtungsmaterial optimal eingestellt werden kann. Hierdurch wird es insbesondere möglich, die Haftmittelfugen an gegenüberliegenden Oberflächen des Werkstücks (z.B. Ober- und Unterseite) gleichmäßig und optisch ansprechend auszuführen.

Obgleich sich der Einsatz von einander überlappenden Andrückelementen prinzipiell an vielfältigen Stellen der Andrückeinrichtung vorteilhaft auswirkt, ist gemäß einer Weiterbildung der Erfindung vorgesehen, dass mindestens zwei überlappend angeordnete Andrückelemente derart angeordnet sind, dass sie als erste Andrückelemente der Andrückeinrichtung mit dem Beschichtungsmaterial in Kontakt kommen. Hierdurch kann die offene Zeit des verwendeten Haftmittels besonders vorteilhaft ausgenutzt werden, sodass sich das Beschichtungsmaterial dank der noch geringen Viskosität des Haftmittels optimal an die zu beschichtende Oberfläche des Werkstücks andrücken lässt. Dies führt zu einem sehr gleichmäßigen und optisch ansprechenden Erscheinungsbild des fertig gestellten Werkstücks.

Gemäß einer Weiterbildung der Erfindung ist ferner vorgesehen, dass mindestens zwei Andrückelemente in Förderrichtung nebeneinander angeordnet sind, d.h. vollständig überlappend angeordnet sind. Hierdurch lässt sich der Anpressdruck der Andrückelemente besonders gezielt einstellen, und es entstehen keine Scherverformungen oder Falten in dem Beschichtungsmaterial. Ferner können die Andrückelemente bei dieser Zielrichtung bevorzugt auch auf einer gemeinsamen Achse vorgesehen sein, was eine besonders einfache und gleichzeitig stabile und somit zuverlässige Konstruktion ergibt.

Gemäß der Erfindung ist ferner vorgesehen, dass mindestens ein Andrückelement mittels eines elastischen Federelements gelagert ist. Hierdurch lässt sich der durch das jeweilige Andrückelement aufgebrachte Anpressdruck auch bei wechselnden Werkstückgeometrien und -toleranzen gezielt einstellen, was ein besonders ansprechendes und gleichmäßiges Beschichtungsergebnis zulässt. Dabei kann das Federelement beispielsweise unmittelbar an das Andrückelement angrenzend oder auch erst an benachbarten Bauteilen. Vorliegend ist das Andrückelement federnd auf einer Achse drehbar gelagert.

Besonders bevorzugt ist es jedoch, dass mindestens zwei Andrückelemente jeweils mittels eines elastischen Federelements gelagert sind. Hierdurch lässt sich die Andrückkraft der Andrückelemente besonders gezielt an die jeweiligen Randbedingungen anpassen, wie beispielsweise die zu verarbeitenden Werkstückgeometrien, die Formen der Andrückelemente, etc.. Dabei ist es besonders bevorzugt, dass die Federelemente derart ausgelegt sind, dass die Andrückelemente bei gleicher Lage der Andrückfläche im Wesentlichen die gleiche Andrückkraft aufbringen. Hierdurch kann eine besonders gleichmäßige und somit optisch ansprechende Leimfuge sichergestellt werden.

Im Rahmen der Erfindung können unterschiedlichste Federelemente zum Einsatz kommen. Um jedoch auch bei wechselnden Betriebsbedingungen (wie beispielsweise Dicken des Beschichtungsmaterials, Toleranzen des Werkstücks, wechselnden Haftmittelmengen, etc.) stets vor bestimmte Andrückverhältnisse sicherzustellen, ist gemäß einer Weiterbildung der Erfindung vorgesehen, dass mindestens ein Federelement in seinem Verformungsbereich zumindest bereichsweise eine im Wesentlichen konstante Federkraft aufbringt.

Obgleich die Bauart des mindestens einen Federelements im Rahmen der Erfindung nicht besonders beschränkt ist, ist gemäß einer Weiterbildung der Erfindung vorgesehen, dass mindestens ein Federelement ausgebildet ist aus der Gruppe bestehend aus Schraubenfederelement, Blattfederelement, Elastomerfederelement, pneumatisches Federelement und magnetisches Federelement.

Die Verformungseigenschaften des mindestens einen Piezoelements können im Rahmen der vorliegenden Erfindung vielfältig ausgestaltet sein, beispielsweise können die Federelemente ein linear-elastisches Verformungsverhalten aufweisen. Dabei ist gemäß einer Weiterbildung der Erfindung vorgesehen, dass Federkernlinie mindestens eines Federelements einstellbar ist. Hierdurch kann die Federkernlinie des jeweiligen Federelements flexibel an die jeweiligen Randbedingungen wie beispielsweise die Eigenschaften des Beschichtungsmaterials, des Haftmittels, etc. angepasst werden. Auf diese Weise lässt sich das Beschichtungsergebnis weiter verbessern.

Ferner ist gemäß einer Weiterbildung der Erfindung vorgesehen, dass die mindestens zwei überlappend angeordneten Andrückelemente ein zumindest abschnittsweise zylindrisches und ein sich zumindest abschnittsweise verjüngendes, insbesondere konisches Andrückelement aufweisen. Hierdurch ergibt sich eine optimale Führung des Beschichtungsmaterials bei gleichzeitig wirksamem Ausgleich von Nerkstückhöhentoleranzen. Denn das zylindrische Andrückelement stellt eine sichere Führung des Beschichtungsmaterials sicher, während das sich zumindest abschnittsweise verjüngende Andrückelement auch bei wechselnden Werkstückhöhen stets eine saubere Fuge im Verbindungsbereich sicherstellt.

Um diese technischen Effekte besonders ausgeprägt zu erzielen, ist es besonders bevorzugt, dass sich das zumindest abschnittsweise verjüngende Andrückelement zu dem zumindest abschnittsweise zylindrischen Andrückelement hin verjüngt.

Prinzipiell kann die erfindungsgemäße Vorrichtung ohne Zufuhr eines separaten Haftmittels arbeiten, beispielsweise indem haftmittelfreie Fügemechanismen zum Einsatz kommen oder in den zu fügenden Bauteilen bzw. Beschichtungsmaterialien vorhandene Haftmittel genutzt bzw. aktiviert werden. Zu diesem Zweck kann die Vorrichtung gemäß einer Weiterbildung der Erfindung eine Vorrichtung zum Aktiveren eines Haftmittels aufweisen. Diese Vorrichtungen können im Rahmen der vorliegenden Erfindung auf unterschiedliche Art und Weise ausgestaltet sein, wobei auch eine klassische Schmelzkleber-Verleimtechnik zum Einsatz kommen kann. Darüber hinaus ist gemäß einer Weiterbildung der Erfindung vorgesehen, dass mindestens eine Vorrichtung zum Aktiveren eines Haftmittels eine Energiequelle aufweist. Der Begriff "Energie" ist im Rahmen der vorliegenden Erfindung in einem breiten Sinne aufzufassen. So ist gemäß einer Weiterbildung der Erfindung vorgesehen, dass die mindestens eine Energiequelle ausgewählt ist aus der Gruppe bestehend aus Laser, Infrarotquelle, Ultraschallquelle, Magnetfeldquelle, Mikrowellenquelle, Plasmaquelle und Begasungsquelle. Diese nicht abschließende Aufzählung macht deutlich, dass neben klassischen Energiequellen auch Energiequellen in Frage kommen, die Energie beispielsweise durch eine chemische Reaktion auf das Beschichtungsmaterial aufbringen, wie beispielsweise eine Begasungsquelle. In diesem Zusammenhang ist auch zu beachten, dass die jeweilige Energiequelle einerseits ein bereits als Haftmittel vorhandenes Mittel aktivieren kann und andererseits auch ein an sich nicht als Haftmittel dienendes Mittel durch Energiebeaufschlagung, chemische Reaktion oder dergleichen zu einem haftenden Mittel machen kann.

Jede der genannten Energiequellen besitzt ihre spezifischen Vorteile. So ermöglicht ein Laser ein besonders zielorientiertes und zügiges Arbeiten, während Infrarot- und Plasmaquellen einen breitspurigen Betrieb und eine gute Tiefenwirkung zulassen. Energiequellen mit Ultraschall, Magnetfeld und Mikrowelle arbeiten berührungslos und können auch während des Andrückens des Beschichtungsmaterials noch Energie in den Prozess einbringen. Dabei besitzt insbesondere ein Magnetfeld eine gute Tiefenwirkung. Eine auf Begasung basierende Energiequelle eignet sich besonders gut dazu, durch Einwirkung auf und Reaktion mit dem Beschichtungsmaterial überhaupt erst einen Stoff zu bilden, der haftende Eigenschaften besitzt.

Alternativ oder zusätzlich ist es gemäß einer Weiterbildung der Erfindung vorgesehen, dass die Vorrichtung ferner eine Einrichtung zum Auftragen eines Haftmittels aufweist. Auf diese Weise kann die Vorrichtung besonders flexibel an wechselnde Kombinationen von Werkstücken und Beschichtungsmaterialien angepasst werden, und es können beliebige Materialien verarbeitet werden.

### Kurze Beschreibung der Zeichnungen

Fig. 1 zeigt schematisch eine Draufsicht einer Beschichtungsvorrichtung gemäß einer bevorzugten Ausführungsform der Erfindung;
Fig. 2 zeigt schematisch eine teilweise Seitenansicht einer Andrückeinrichtung;
Fig. 3 zeigt schematisch eine teilweise Seitenansicht einer weiteren Andrückeinrichtung;
Fig. 4 zeigt schematisch eine teilweise Seitenansicht noch einer weiteren Andrückeinrichtung.

Ausführliche Beschreibung bevorzugter Ausführungsformen

Bevorzugte Ausführungsformen der Erfindung werden nachfolgend ausführlich unter Bezugnahme auf die begleitenden Zeichnungen beschrieben.

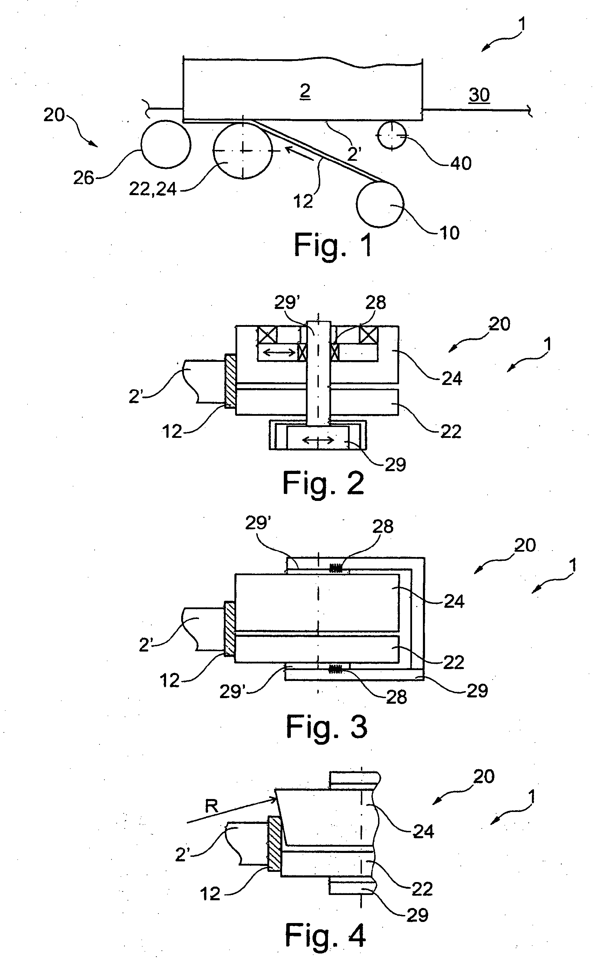

Eine Beschichtungsvorrichtung 1 gemäß einer bevorzugten Ausführungsform der Erfindung ist in Fig. 1 schematisch in einer Draufsicht gezeigt. Die Beschichtungsvorrichtung 1 dient zum Beschichten von Werkstücken 2, die beispielsweise zumindest abschnittsweise aus Holz, Holzwerkstoffen, Kunststoff oder ähnlichen Materialien bestehen. Es ist jedoch zu beachten, dass die vorliegende Erfindung nicht auf die Beschichtung derartiger Werkstücke beschränkt ist.

Die Beschichtungsvorrichtung 1 umfasst in der vorliegenden Ausführungsform zunächst eine Fördereinrichtung 30, die in der vorliegenden Ausführungsform als Durchlauffördereinrichtung (beispielsweise Förderband, Förderkette, Förderriemen, Förderrollen oder dergleichen) ausgestaltet ist, um die Werkstücke 2 in einer Förderrichtung (von rechts nach links in Fig. 1) zu fördern. Es ist jedoch zu beachten, dass die erfindungsgemäße Beschichtungsvorrichtung 1 nicht notwendigerweise als Durchlaufmaschine ausgebildet sein muss, sondern dass die Beschichtungsvorrichtung 1 auch als Stationärmaschine ausgebildet sein kann, bei welcher die Werkstücke 2 im Zuge der Beschichtung im Wesentlichen stationär sind. Auch Mischformen beider Konzepte sind möglich. In jedem Falle weist die Beschichtungsvorrichtung 1 jedoch eine Fördereinrichtung zum Herbeiführen einer Relativbewegung zwischen dem Werkstück 2 und einer Andrückeinrichtung für das Beschichtungsmaterial auf.

Die in Fig. 1 gezeigte Andrückeinrichtung 20 dient zum Andrücken eines Beschichtungsmaterials 12 an eine zu beschichtende Oberfläche 2' des Werkstücks 2. Dabei wird das Beschichtungsmaterial 12 von einer Zuführeinrichtung 10 zu der zu beschichtenden Oberfläche 2' des Werkstücks 2 zugeführt. Bei dem Beschichtungsmaterial kann es sich beispielsweise um ein Kunststoffmaterial, Furniermaterial, Papier- bzw. Kartonmaterial, jedoch auch vielfältige andere Einzel- oder Sandwichmaterialien handeln. Dabei kann das Beschichtungsmaterial beispielsweise zur Beschichtung einer Schmalfläche oder auch einer Breitfläche des Werkstücks ausgelegt sein.

Schließlich weist die Beschichtungsvorrichtung 1 in der vorliegenden Ausführungsform eine Leimauftragseinrichtung 40 auf, die eingereichtet ist, ein Haftmittel bzw. einen Leim auf die zu beschichtende Oberfläche 2' des Werkstücks 2 aufzutragen. Alternativ oder zusätzlich kann die Leimauftrageinrichtung 40 auch eingerichtet sein, ein Haftmittel auf die dem Werkstück 2 zugewandte Oberfläche des Beschichtungsmaterials 12 aufzutragen. Ferner ist es alternativ oder zusätzlich möglich, verschiedene, eingangs genannte Energiequellen einzusetzen, um ein auf den Fügeflächen vorhandenes oder aufgetragenes Haftmittel oder sonstige Fügemechanismen in den Fügeflächen zu aktivieren.

Die Andrückeinrichtung 20 weist in der vorliegenden Ausführungsform, wie in Fig. 1 am besten zu erkennen ist, mehrere Andrückelemente 22, 24 und 26 auf, die in der vorliegenden Ausführungsform als Andrückrollen ausgebildet sind. Es ist jedoch zu beachten, dass die Andrückeinrichtung 20 im Rahmen der Erfindung vielfältige Kombinationen gleicher oder verschiedener Andrückelemente wie beispielsweise auch Andrückschuh etc. aufweisen kann.

Verschiedene bevorzugte Ausgestaltungen der Andrückeinrichtung 20 sind in den Figuren 2, 3 und 4 jeweils in teilweisen Seitenansichten dargestellt. Bei der in Fig. 2 gezeigten bevorzugten Ausgestaltung sind zwei Andrückelemente 22 und 24 auf einer gemeinsamen Achse 29' nebeneinander angeordnet, sodass sie in Durchlaufrichtung vollständig überlappend angeordnet sind. Dabei sind die Andrückelemente 22 und 24 jeweils über ein Federelement 28 auf der Achse gelagert, sodass sie eine elastische Andrückkraft auf das Beschichtungsmaterial 12 aufbringen können. Dabei ist zu beachten, dass in Fig. 2 nur eines der Federelemente 28 schematisch gezeigt ist. Die Achse 29' ist auf einem Träger 29 befestigt, der entlang der Fördereinrichtung 30 in Durchlaufrichtung verschiebbar bzw. verfahrbar sein kann.

Eine weitere bevorzugte Ausgestaltung der Andrückeinrichtung 20 ist in Fig. 3 in einer teilweisen Seitenansicht dargstellt. Diese unterscheidet sich von der in Fig. 2 gezeigten Ausführungsform primär dadurch, dass die Andrückelemente 22 und 24 jeweils auf einem eigenen Achsstummel 29' drehbar gelagert sind. Die Achsstummel 29' sind wiederum über ein Federelement elastisch an einem Träger 29 befestigt, und zwar derart, dass die Andrückelemente 22, 24 wiederum eine elastische Kraft (in einer Richtung im Wesentlichen senkrecht zur Erstreckungsrichtung des Beschichtungsmaterials 12) auf das Beschichtungsmaterial 12 aufbringen können.

Bei beiden Ausgestaltungen bzw. allgemein im Rahmen der Erfindung können die Federelemente 28 unterschiedlich ausgestaltet sein. So kann es sich beispielsweise um Schraubenfederelemente, Blattfederelemente, Elastomerfederelemente, pneumatische Federelemente oder magnetische Federelemente handeln, wobei die Federelemente bevorzugt ein nicht-linear elastisches Verformungsverhalten aufweisen. Insbesondere ist es vorteilhaft, wenn die Federelemente in ihrem Verformungsbereich zumindest bereichsweise eine im Wesentlichen konstante Federkraft aufbringen, sodass auch bei wechselnden Kantendicken eine konstante Andruckkraft sichergestellt werden kann. Ferner kann die Federkernlinie einzelner oder mehrerer Federelemente einstellbar sein, beispielsweise mittels einer in den Figuren nicht gezeigten Stellschraube oder anderen Einstellmitteln.

Eine weitere Ausgestaltung der Andrückeinrichtung 20 ist in Fig. 4 schematisch in einer teilweisen Seitenansicht dargestellt. Die in Fig. 4 gezeigte Ausgestaltung unterscheidet sich von den zuvor beschriebenen Ausgestaltungen durch die äußere Gestalt der Andrückelemente. Während in den meisten Fällen zylindrische bzw. zumindest abschnittsweise zylindrische Andrückelemente zum Einsatz kommen können, ist bei der in Fig. 4 gezeigten Ausgestaltung eines der Andrückelemente konisch ausgebildet, wobei sich das konische Andrückelement 24 zu einem zylindrischen Andrückelement 22 hin verjüngt, das weitgehend überlappend hierzu angeordnet ist. Auf diese Weise lässt sich eine sichere Führung des Beschichtungsmaterials 12 durch das zylindrische Andrückelement 22 mit einer guten Anpassungsfähigkeit der Andrückeinrichtung an wechselnde Höhen des Werkstücks 2 durch das konische Andrückelement 24 vereinen.

Der Betrieb der erfindungsgemäßen Beschichtungsvorrichtung 1 vollzieht sich beispielsweise wie folgt. Werkstücke 2 werden mittels der Fördereinrichtung 30 in einer Durchlaufrichtung (von rechts nach links in Fig. 1) gefördert und mittels der Haftmittelauftragseinrichtung 40 im Bereich ihrer Schmalfläche 2' mit einem Haftmittel versehen. Simultan hierzu wird das Beschichtungsmaterial 12 von der Zuführeinrichtung 10 zugeführt und mittels der Andrückeinrichtung 20 an die Schmalfläche 2' angedrückt. Dabei treten die überlappend angeordneten Andrückelemente 22 und 24 als erstes mit dem Beschichtungsmaterial 12 in Kontakt und drücken dieses gleichmäßig und unter Bildung einer gleichmäßigen und ansprechenden Fuge bzw. weitgehend ohne sichtbare Fuge an die zu beschichtende Oberfläche 2' des Werkstücks an. Durch die Anordnung mehrerer überlappender Andrückelemente 22, 24, die als erstes mit dem Beschichtungsmaterial 12 in Kontakt treten, kann die "offene Zeit" des aufgetragenen (oder gegebenenfalls aktivierten bzw. gebildeten) Haftmittels optimal genutzt werden, was zu einem deutlich verbesserten Beschichtungsergebnis führt.

## Patentansprüche

1. Vorrichtung (1) zum Beschichten von Werkstücken (2), die bevorzugt zumindest abschnittsweise aus Holz, Holzwerkstoffen, Kunststoff oder dergleichen bestehen, mit:
einer Zuführeinrichtung (10) zum Zuführen eines Beschichtungsmaterials (12) zu einer zu beschichtenden Oberfläche (2') des Werkstücks (2),
einer Andrückeinrichtung (20) zum Andrücken des Beschichtungsmaterials (12) an die zu beschichtende Oberfläche (2') des Werkstücks (2), und
einer Fördereinrichtung (30) zum Herbeiführen einer Relativbewegung zwischen dem Werkstück (2) und zumindest der Andrückeinrichtung (20), wobei
die Andrückeinrichtung (20) mindestens zwei Andrückelemente (22, 24) aufweist, die in Förderrichtung zumindest abschnittsweise überlappend angeordnet sind,
**dadurch gekennzeichnet, dass**
mindestens ein Andrückelement (22, 24) mittels eines elastischen Federelements (28) auf der Achse (29') gelagert ist.

2. Vorrichtung zum Beschichten von Werkstücken nach Anspruch 1, **dadurch gekennzeichnet, dass** mindestens zwei überlappend angeordnete Andrückelemente (22, 24) derart angeordnet sind, dass sie als erste Andrückelemente der Andrückeinrichtung (20) mit dem Beschichtungsmaterial (12) in Kontakt kommen.

3. Vorrichtung zum Beschichten von Werkstücken nach Anspruch 1 oder 2, **dadurch gekennzeichnet, dass** mindestens zwei Andrückelemente (22, 24) in Förderrichtung nebeneinander angeordnet sind, insbesondere auf einer gemeinsamen Achse (29').

4. Vorrichtung zum Beschichten von Werkstücken nach Anspruch 3, **dadurch gekennzeichnet, dass** mindestens zwei Andrückelemente (22, 24) jeweils mittels eines elastischen Federelements (28) gelagert sind, wobei die Federelemente (28) bevorzugt derart ausgelegt sind, dass die Andrückelemente (22, 24) bei gleicher Lage der Andrückfläche im wesentlichen die gleiche Andrückkraft aufbringen.

5. Vorrichtung zum Beschichten von Werkstücken nach Anspruch 4, **dadurch gekennzeichnet, dass** mindestens ein Federelement (28) in seinem Verformungsbereich zumindest bereichsweise eine im wesentlichen konstante Federkraft aufbringt.

6. Vorrichtung zum Beschichten von Werkstücken nach einem der Ansprüche 4 oder 5, **dadurch gekennzeichnet, dass** mindestens ein Federelement (28) ausgewählt ist aus der Gruppe bestehend aus Schraubenfederelement, Blattfederelement, Elastomerfederelement, pneumatisches Federelement und magnetisches Federelement.

7. Vorrichtung zum Beschichten von Werkstücken nach einem der Ansprüche 4 bis 6, **dadurch gekennzeichnet, dass** die Federkennlinie mindestens eines Federelements (28) einstellbar sein kann.

8. Vorrichtung zum Beschichten von Werkstücken nach einem der vorhergehenden Ansprüche, **dadurch gekennzeichnet, dass** die mindestens zwei überlappend angeordneten Andrückelemente (22, 24) ein zumindest abschnittsweise zylindrisches (22) und ein sich zumindest abschnittsweise verjüngendes, insbesondere konisches (24) Andrückelement aufweisen.

9. Vorrichtung zum Beschichten von Werkstücken nach Anspruch 8, **dadurch gekennzeichnet, dass** sich das zumindest abschnittsweise verjüngende Andrückelement (24) zu dem zumindest abschnittsweise zylindrischen Andrückelement (22) hin verjüngt.

10. Vorrichtung zum Beschichten von Werkstücken nach einem der vorhergehenden Ansprüche, **dadurch gekennzeichnet, dass** sie ferner eine Einrichtung (40) zum Auftragen und/oder Aktivieren eines Haftmittels aufweist.

## Claims

1. Apparatus (1) for coating workpieces (2) which are preferably in at least one section made of wood, derived timber products, plastic or the like, having:
a feeder (10) for feeding a coating material (12) to a surface (2') of the workpiece (2) to be coated,
a pressing device (20) for pressing the coating material (12) against the surface (2') of the workpiece (2) to be coated, and
a conveying device (30) for bringing about a relative movement between the workpiece (2) and at least the pressing device (20), wherein
the pressing device (20) has at least two pressing elements (22, 24) which in at least one section are arranged in overlapping fashion in the direction of conveying,
**characterised in that**
at least one pressing element (22, 24) is mounted on the shaft (29') by means of a resilient spring element (28).

2. Apparatus for coating workpieces according to claim 1, **characterised in that** at least two pressing elements (22, 24) arranged in overlapping fashion are arranged in such a way that they come into contact with the coating material (12) as the first pressing elements of the pressing device (20).

3. Apparatus for coating workpieces according to claim 1 or 2, **characterised in that** at least two pressing elements (22, 24) are arranged adjacent to each other in the direction of conveying, in particular on a common shaft (29').

4. Apparatus for coating workpieces according to claim 3, **characterised in that** at least two pressing elements (22, 24) are in each case mounted by means of a resilient spring element (28), wherein the spring elements (28) are preferably designed in such a way that the pressing elements (22, 24) apply substantially the same pressing force when the pressing surface is in the same position.

5. Apparatus for coating workpieces according to claim 4, **characterised in that** at least one spring element (28) in its region of deformation applies a substantially constant spring force in at least one region.

6. Apparatus for coating workpieces according to either of claims 4 or 5, **characterised in that** at least one spring element (28) is selected from the group consisting of helical spring element, leaf spring element, elastomeric spring element, pneumatic spring element and magnetic spring element.

7. Apparatus for coating workpieces according to any of claims 4 to 6, **characterised in that** the spring characteristic of at least one spring element (28) can be variable.

8. Apparatus for coating workpieces according to any of the preceding claims, **characterised in that** the at least two pressing elements (22, 24) arranged in overlapping fashion have a pressing element (22) which in at least one section is cylindrical and a pressing element (24) which in at least one section is tapered, particularly conical.

9. Apparatus for coating workpieces according to claim 8, **characterised in that** the pressing element (24) which is tapered in at least one section tapers towards the pressing element (22) which in at least one section is cylindrical.

10. Apparatus for coating workpieces according to any of the preceding claims, **characterised in that** it further has a device (40) for applying and/or activating a bonding agent.

## Revendications

1. Installation (1) de revêtement de pièces (2), préférentiellement constituées au moins partiellement de bois, de matériaux ligneux, de matière plastique ou similaires, avec :
un dispositif d'amenée (10) pour l'amenée d'un matériau de revêtement (12) vers une surface (2') à revêtir de la pièce (2),
un dispositif de compression (20) pour le serrage du matériau de revêtement (12) sur la surface (2') de pièce (2) à revêtir, et
un dispositif de transport (30) pour le déclenchement d'un déplacement relatif entre la pièce (2) et au moins le dispositif de compression (20),
le dispositif de compression (20) comportant au moins deux éléments de compression (22, 24) qui sont disposés en se chevauchant au moins partiellement dans la direction de transport,
**caractérisée en ce que**
au moins un élément de compression (22, 24) est monté au moyen d'un élément élastique à ressort (28) sur l'axe (29').

2. Installation de revêtement de pièces selon la revendication 1, **caractérisée en ce qu'**au moins deux éléments de compression (22, 24) se chevauchant sont disposés de manière à entrer en contact avec le matériau de revêtement (12) en tant que premiers éléments de compression du dispositif de compression (20).

3. Installation de revêtement de pièces selon la revendication 1 ou 2, **caractérisée en ce qu'**au moins deux éléments de compression (22, 24) sont disposés côte à côte dans la direction de transport, en particulier sur un axe (29') commun.

4. Installation de revêtement de pièces selon la revendication 3, **caractérisée en ce qu'**au moins deux éléments de compression (22, 24) sont montés chacun au moyen d'un élément élastique à ressort (28), les éléments à ressort (28) étant préférentiellement prévus de telle manière que les éléments de compression (22, 24) appliquent sensiblement la même force de compression pour la même position de la surface de serrage.

5. Installation de revêtement de pièces selon la revendication 4, **caractérisée en ce qu'**au moins un élément à ressort (28) applique au moins partiellement une force de ressort sensiblement constante dans sa zone de déformation.

6. Installation de revêtement de pièces selon la revendication 4 ou 5, **caractérisée en ce qu'**au moins un élément à ressort (28) est sélectionné dans le groupe composé d'élément à ressort hélicoïdal, d'élément à ressort à lame, d'élément à ressort élastomère, d'élément à ressort pneumatique et d'élément à ressort magnétique.

7. Installation de revêtement de pièces selon l'une des revendications 4 à 6, **caractérisée en ce que** la caractéristique d'élasticité d'au moins un élément à ressort (28) peut être réglée.

8. Installation de revêtement de pièces selon l'une des revendications précédentes, **caractérisée en ce que** les au moins deux éléments de compression (22, 24) se chevauchant comprennent un élément de compression au moins partiellement cylindrique (22) et un élément de compression qui s'amincit au moins partiellement, en particulier conique (24).

9. Installation de revêtement de pièces selon la revendication 8, **caractérisée en ce que** l'élément de compression (24) qui s'amincit au moins partiellement s'amincit dans la direction de l'élément de compression (22) au moins partiellement cylindrique.

10. Installation de revêtement de pièces selon l'une des revendications précédentes, **caractérisée en ce que** celle-ci comprend en outre un dispositif (40) pour l'application et/ou l'activation d'un adhésif.
